# FASCICULE DE BREVET EUROPEEN

(11) **EP 2 089 213 B1**
(45) Date de publication et mention de la délivrance du brevet: **20.02.2013**
(21) Numéro de dépôt: 07826494.2
(22) Date de dépôt: 21.09.2007
(51) Int. Cl.: B29C 53/38, B29C 65/40, B65D 35/00

(54) **PROCEDE ET DISPOSITIF DE SOUDAGE INTERIEUR DE TUBES EN MATIERE PLASTIQUE**
VERFAHREN UND VORRICHTUNG ZUR INTERNEN SCHWEISSUNG VON KUNSTSTOFFRÖHREN
METHOD AND DEVICE FOR SOLDERING THE INSIDE OF PLASTIC TUBES

(30) Priorité: 28.09.2006 EP 06121466
(43) Date de publication de la demande: 19.08.2009
(73) Titulaire: Aisapack Holding SA, 1896 Vouvry (CH)
(72) Inventeur: VOIGTMANN, Jean-Pierre, CH-1893 Muraz (CH)
(74) Mandataire: Grosfillier, Philippe
(86) Numéro de dépôt international: PCT/IB2007/053842
(87) Numéro de publication internationale: WO 2008/038206

(56) Documents cités:
- EP-A- 0 218 102
- EP-A1- 0 224 808
- EP-A2- 0 177 470
- US-A1- 3 066 063

## Description

### Domaine de l'invention

L'invention se situe dans le domaine des emballages de forme tubulaires constitués notamment d'un laminé de matière plastique qui est enroulé.

Plus précisément, l'invention concerne les laminés enroulés dont les bords ne se chevauchent pas.

### Etat de la technique

Le soudage des bords d'un laminé afin d'obtenir un corps tubulaire se fait le plus souvent par chevauchement.

Voir à titre d'exemple la demande de brevet allemand DE 2008085, ou EP0,177,470A. Lorsque l'on cherche à disposer les bords face à face, on ménage entre ceux-ci un espace que l'on remplit avec un matériau tel que bande en matière plastique, la bande faisant office d'élément de soudure.

Voir à cet effet la demande de brevet européen EP 0 000 643. Il existe cependant un besoin de mettre les bords en contact direct (soudage bout à bout), pour des raisons techniques et esthétiques.

Un soudage bout à bout assure une meilleure continuité et homogénéité du matériau qui constitue la paroi de l'emballage. Il évite notamment un contact entre le produit disposé à l'intérieur du tube avec une couche barrière disposée à l'intérieure du laminé. Par ailleurs, l'inexistence d'un élément de soudure sur la face externe diminue la visibilité de la zone de soudure.

Par ailleurs, que les bords soient mis bout à bout, avec ou sans espace contenant un élément de soudure, il existe également un besoin de pouvoir diminuer, voire éliminer, la visibilité de la soudure depuis l'extérieur du tube.

Les systèmes de chauffage de l'état de la technique sont disposés à l'extérieur du tube. Leur activation induisent nécessairement une zone de soudure marquée et mate.

### Exposé général de l'invention

Le problème que la présente invention se propose de résoudre réside dans la fragilité d'une soudure bout à bout et le maintien d'une soudure esthétique, càd qui ne se remarque pas ou presque pas lorsqu'on l'observe depuis l'extérieur.

Dans l'invention, la solution du problème précité consiste à renforcer une telle soudure au moyen d'un cordon de matière plastique

L'invention concerne en premier lieu un procédé de fabrication d'un emballage en matière plastique de forme tubulaire, procédé comprenant une étape d'enroulement lors de laquelle on enroule un laminé, une étape de mise en disposition lors de laquelle on dispose bout à bout les bords du laminé et une étape de fixation lors de laquelle on fixe l'un à l'autre lesdits bords du laminé, caractérisé par le fait que l'on extrude et dépose un cordon de matière plastique à l'état fondu, sur la face interne de l'emballage, de manière à recouvrir au moins la zone définie entre les bords.

Une particularité de l'invention réside dans le fait que l'énergie nécessaire pour effectuer la soudure provient du cordon de matière plastique.

Selon une première variante du procédé selon l'invention, le cordon est déposé préalablement à l'étape de mise en disposition.

Selon une deuxième variante, le cordon est déposé pendant l'étape de mise en disposition.

Selon une troisième variante, le cordon est déposé consécutivement à l'étape de mise en disposition.

Le cordon peut être disposé en dessous ou en dessus de la zone de soudure.

L'invention concerne également un emballage de forme tubulaire obtenu selon le procédé tel que défini précédemment, l'emballage se caractérise par le fait qu'il comprend un élément de renforcement de la zone définie entre les bords qui est constitué d'un cordon extrudé de matière plastique à l'état fondu.

L'invention concerne enfin un dispositif pour la mise en oeuvre d'un procédé tel que défini précédemment. Le dispositif se caractérise par le fait qu'il comporte une tige de soudage adaptée pour être entourée par un laminé caractérisé par le fait qu'il comporte des moyens pour extruder et disposer un cordon de matière plastique à l'état fondu entre la surface externe de la tige de soudage et un laminé disposé autour de ladite tige.

Dans un mode de réalisation de l'invention, le dispositif comprend une courroie de transport préchauffée disposée sur la tige de soudage, de manière à ce que ledit cordon soit disposé entre ladite courroie et un laminé entouré ladite tige.

Dans un autre mode de réalisation de l'invention le dispositif comprend une courroie de conduite extérieure et un patin d'appui ajustable disposés de manière à exercer en direction de ladite tige une pression sur un laminé et un cordon de matière plastique qui seraient disposés entre ladite courroie de conduite et ladite tige.

Avantageusement, on peut utiliser un dispositif de préchauffage des bords, par exemple par contact, ce qui a pour effet d'augmenter la température des deux bords du laminé, facilitant ou améliorant ainsi les conditions de soudage.

Alternativement ou en outre, on utilise un autre dispositif muni d'un soufflage à air chaud de façon à maintenir l'air ambiant autour du cordon à plusieurs centaines de °C et de ce fait, éviter une chute en température du cordon lors de son passage de la sortie de la tête d'extrusion à la mise en forme du cordon.

Selon une variante de l'invention, les bords du laminé sont coupés en biais, ce qui a pour effet d'augmenter la surface latérale de contact du laminé dans la zone de soudure. Une telle configuration permet également d'influencer la qualité et la résistance de la soudure.

Dans une autre variante de l'invention, on extrude un cordon d'une forme autre que cylindrique, par exemple en forme de T inversé, ce qui facilite la mise en forme du cordon lors de la soudure.

Une autre variante de l'invention consiste à utiliser un cordon de matière plastique co-extrudée (avec une matière barrière au centre du cordon) pour garantir également dans la zone définie entre les bords du laminé, une bonne protection barrière avec l'environnement externe du tube.

La présente invention présente plusieurs avantages, en particulier :
- Un système de soudage complexe par haute fréquence n'est plus nécessaire, l'énergie nécessaire pour effectuer la soudure provient du cordon de matière plastique.
- L'aspect extérieur du tube est parfait étant donné que l'énergie pour effectuer la soudure est appliquée depuis l'intérieur. Avec les systèmes de l'état de la technique, on applique l'énergie depuis l'extérieur, la soudure est mate et marquée.
- Couche (cordon) recouvrante importante en PE ou PP (ou autres matières) à l'intérieur du tube sur la jonction des 2 bords du laminé, évitant tout contact entre le produit dans le tube et la couche barrière du laminé (ex. aluminium).

### Exposé détaillé de l'invention

L'invention est décrite plus en détail ci-après au moyen d'exemples illustrés par les figures suivantes :
La figure 1 est une vue en perspective d'un premier dispositif selon l'invention.
La figure 2 est une coupe latérale du dispositif de la figure 1.
La figure 3 est une vue en perspective d'un deuxième dispositif selon l'invention.
La figure 4 est une coupe latérale du dispositif de la figure 3.
La figure 5 est une vue en perspective d'un troisième dispositif selon l'invention.
La figure 6 est une coupe latérale du dispositif de la figure 5.
La figure 7 est une vue en perspective d'un quatrième dispositif selon l'invention.
La figure 8 est une coupe latérale du dispositif de la figure 7.
La figure 9 est une vue en perspective d'un cinquième dispositif selon l'invention.
La figure 10 est une coupe latérale du dispositif de la figure 9.
La figure 11 représente une première variante d'une soudure selon l'invention.
La figure 12 représente une deuxième variante d'une soudure selon l'invention.
La figure 13 représente une troisième variante d'une soudure selon l'invention.
La figure 14 représente une quatrième variante d'une soudure selon l'invention.

### Liste des références numérique utilisées dans les figures

1. Tige de soudage
2. Matrice de calibrage (hauteur ajustable)
3. Courroie (métallique) intérieure
4. Filière de formation
5. Patin d'appui
6. Courroie extérieure
7. Tête d'extrusion
8. Premier bord de laminé
9. Deuxième bord de laminé
10.Zone de soudure
11. Laminé (bande continue)
12.Cordon de matière plastique extrudée
13.Couche barrière
14. Espace
15. Roue de compression
16.Cordon de matière plastique co-extrudée (avec une matière barrière au centre du cordon)

Le tube est formé en continu par enveloppement progressif de la tige soudage 1 sur toute sa circonférence avec un ruban de laminé 11 tiré (de gauche à droite sur les figures) au travers de la filière de formation **4** Le laminé **11** en PE ou PP (ou autres matières) (mono ou multicouches) est alors soudé longitudinalement par dépose d'un cordon de matière plastique extrudée à l'état fondu **12** à l'intérieur du tube.

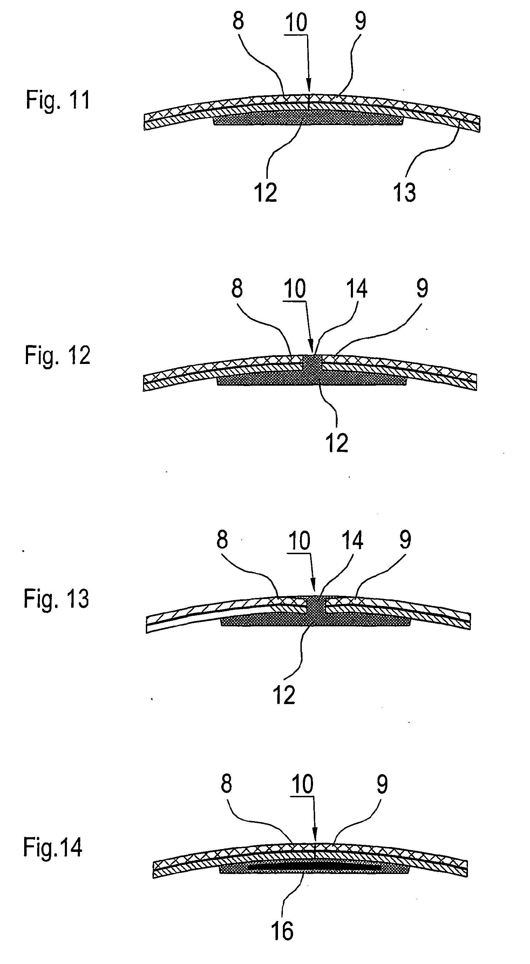

Selon la largeur donnée au laminé **11,** il est possible d'ajuster un espace **14** entre les bords **8,9** du laminé **11** formé sur le diamètre final du tube. Le cordon **12** déposé de l'intérieur pourra ainsi remplir cet espace **14** (figure 12) et souder également la couche extérieure d'un laminé **11.** p.ex. multicouches qui contient une couche barrière **13.** Au besoin, la soudure **12** pourra même recouvrir en partie une portion externe des bords **8,9** du laminé **11** (figure 13). L'utilisation d'un cordon de matière plastique co-extrudée à l'état fondu **16** (avec une matière barrière au centre du cordon) permet de garantir également dans l'espace **14** une bonne protection barrière avec l'environnement externe du tube (figure 14).

Pour des raisons esthétiques, on préfère minimiser cet espace **14.**

### 1ere variante :

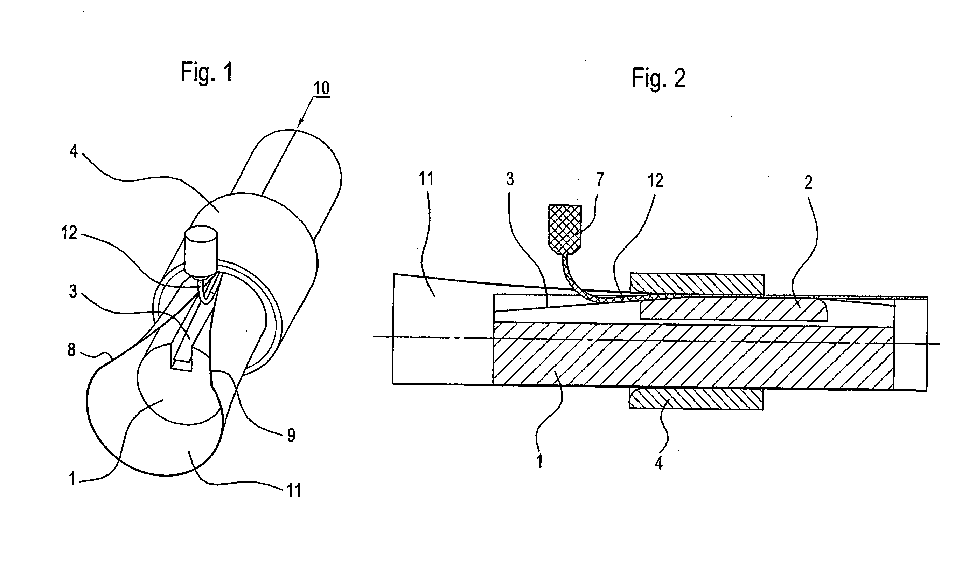

Les figures 1 et 2 illustrent l'introduction du cordon extrudé à l'état fondu **12** par l'intermédiaire d'une courroie de transport préchauffée **3** sur une matrice de calibrage **2** ajustable en hauteur après que la section du tube soit définitivement formée par le laminé **11** dans une filière **4.**

Le cordon de soudure **12** est d'abord appliqué contre l'intérieur du tube préformé. La soudure est ensuite calibrée aux dimensions voulues (soudure en haut).

### 2e variante:

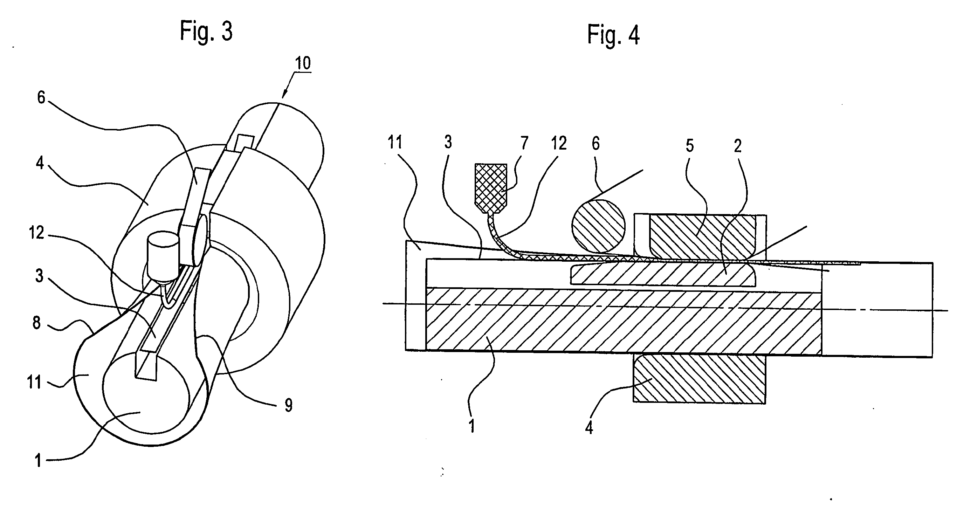

Les figures 3 et 4 montrent l'engagement d'un cordon extrudé à l'état fondu **12** par l'intermédiaire d'une courroie de transport préchauffée **3** sur une matrice de calibrage **2** ajustable en hauteur avant que la section du tube soit définitivement formée par le laminé **11** dans la filière **4.**

Ainsi les bords **8,9** du laminé **11,** dans sa dernière phase de mise en forme, sont appliquées et pressés sur le cordon **12** pré positionné, au moyen d'une courroie de conduite extérieure **6** et un patin d'appui ajustable **5.** La soudure est donc calibrée par le positionnement préalable du cordon **12,** mais surtout par le réglage en hauteur du patin d'appui **5.**

### 3^{e} variante:

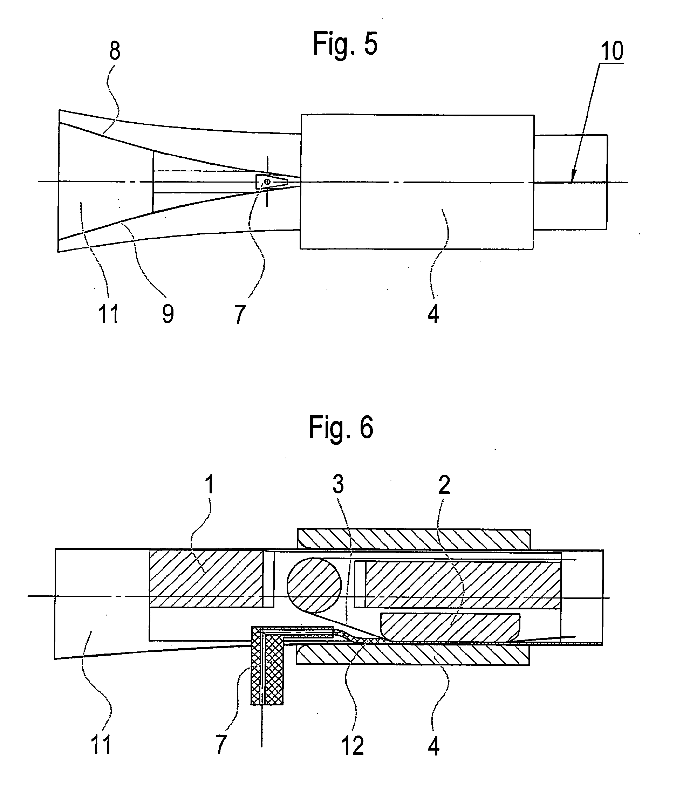

Les figures 5 et 6 montrent un principe similaire mais renversé avec cette fois la soudure en bas.

Le cordon extrudé à l'état fondu **12** est directement déposé à l'intérieur du tube après que sa section circulaire soit définitivement formée par le laminé **11** dans la filière **4.** La soudure est ensuite pressée et calibrée par l'intermédiaire de la courroie intérieure **3** et de la matrice de calibrage **2** ajustable en hauteur. Dans cette variante, toute l'énergie provenant du cordon **12,** nécessaire pour effectuer la soudure, est transmise directement au laminé **11,** minimisant ainsi les pertes énergétiques par contact, par exemple la courroie intérieure **3.**

### 4^{e} variante:

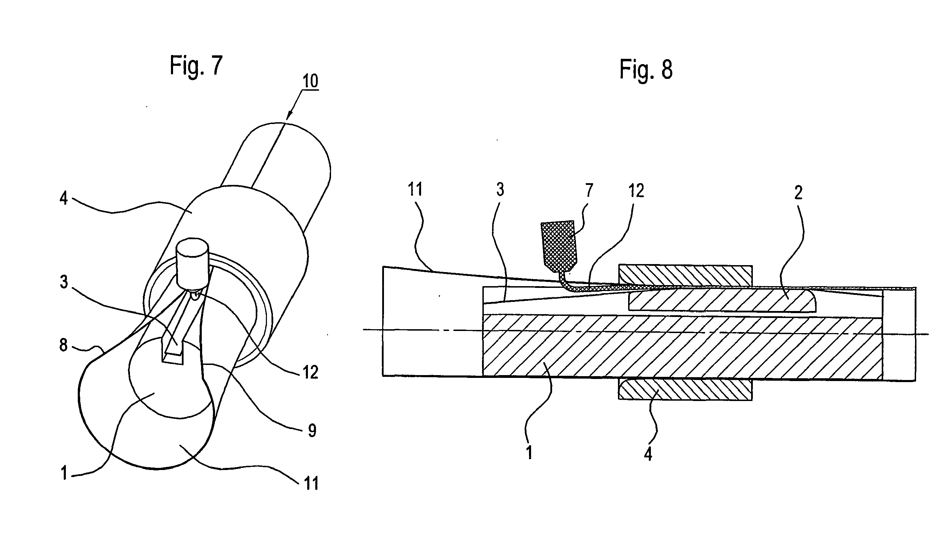

Les figures 7 et 8 montrent l'engagement du cordon extrudé à l'état fondu **12,** mais tendu, évitant la dépose du cordon sur la courroie de transport **3.** Les pertes énergétiques sont ainsi minimisées car le contact avec la courroie de transport **3** est retardé au maximum et se fait en même temps que l'opération de mise en forme et compression du cordon **12.**

### 5^{e} variante:

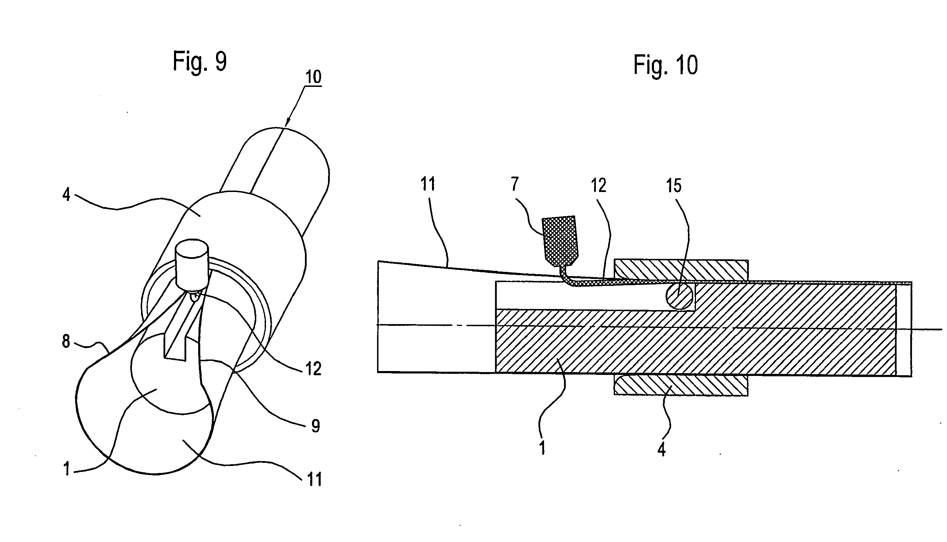

Les figures 9 et 10 montrent l'engagement du cordon extrudé à l'état fondu **12,** mais tendu, le cordon **12** est directement entraîné par le laminé **11** et ne nécessite plus de courroie de transport. La soudure est ensuite pressée et calibrée par une roue de compression **15,** alternativement par un patin de compression **2** (non illustré).

Bien évidemment, l'invention ne se limite pas aux exemples précités.

## Revendications

1. Procédé de fabrication d'un emballage en matière plastique de forme tubulaire, procédé comprenant une étape d'enroulement lors de laquelle on enroule un laminé (11), une étape de mise en disposition lors de laquelle on dispose bout à bout les bords (8,9) du laminé (11) et une étape de fixation lors de laquelle on fixe l'un à l'autre par soudage lesdits bords(8.9) du laminé (11), **caractérisé par le fait que** l'on extrude et dépose un cordon de matière plastique à l'état fondu (12) sur la face interne de l'emballage, de manière à recouvrir au moins la zone de soudure (10) définie entre les bords, l'énergie nécessaire pour effectuer la soudure (10) provenant du cordon de matière plastique(12).

2. Procédé selon la revendication 1 **caractérisé par le fait que** le cordon à l'état fondu (12) est déposé préalablement à l'étape de mise en disposition.

3. Procédé selon la revendication 1 **caractérisé par le fait que** le cordon à l'état fondu (12) est déposé pendant l'étape de mise en disposition.

4. Procédé selon la revendication 1 **caractérisé par le fait que** le cordon à l'état fondu (12) est déposé consécutivement à l'étape de mise en disposition.

5. Procédé selon l'une quelconque des revendications précédentes **caractérisé par le fait que** l'on dispose le cordon à l'état fondu (12) en dessous de ladite zone de soudure (10).

6. Procédé selon l'une quelconque des revendications précédentes 1 à 4 **caractérisé par le fait que** l'on dispose le cordon à l'état fondu (12) en dessus de ladite zone de soudure (10).

7. Procédé selon l'une quelconque des revendications précédentes **caractérisé par le fait que** le cordon (12) est constituée d'une matière plastique co-extrudée avec une matière barrière au centre du cordon (16).

8. Emballage de forme tubulaire obtenu selon un procédé tel que défini dans l'une quelconque des revendications précédentes **caractérisé par le fait qu'**il comprend un élément de renforcement de la zone définie entre les bords qui est constitué d'un cordon extrudé de matière plastique (12).

9. Dispositif pour la mise en oeuvre d'un procédé tel que défini dans l'une quelconque des revendications 1 à 7 **caractérisé par le fait qu'**il comporte une tige de soudage (1) adaptée pour être entourée par un laminé (11) **caractérisé par le fait qu'**il comporte des moyens (7) pour extruder et disposer un cordon de matière plastique à l'état fondu (12) entre la surface externe de la tige de soudage (1) et un laminé (11) disposé autour de ladite tige (1).

10. Dispositif selon la revendication 9 comprenant en outre une courroie de transport préchauffée (3) disposée sur la tige de soudage (1), de manière à ce que ledit cordon à l'état fondu (12) soit disposé entre ladite courroie de transport (3) et un laminé (11) entourant ladite tige(1).

11. Dispositif selon la revendication 9 ou 10 comprenant une courroie de conduite extérieure (6) et un patin d'appui (5) ajustable disposés de manière à exercer en direction de ladite tige de soudage (1) une pression sur un laminé (11) et un cordon de matière plastique à l'état fondu (12) qui seraient disposés entre ladite courroie de conduite (6) et ladite tige de soudage (1).

12. Dispositif selon l'une quelconque des revendications 9 à 11 dans lequel lesdits moyens (7) pour extruder et disposer un cordon de matière plastique à l'état fondu (12) sont disposés du côté de la face supérieure de la tige de soudage (1).

13. Dispositif selon l'une quelconque des revendications 9 à 11 dans lequel lesdits moyens (7) pour extruder et disposer un cordon de matière plastique à l'état fondu (12) sont disposés du côté de la face inférieure de la tige de soudage (1).

## Claims

1. Process for manufacturing plastic packaging in tubular form, which process comprises a wrapping step during which a laminate (11) is wrapped, an abutting step during which the edges (8, 9) of the laminate (11) are butted together and a fastening step during which said edges (8, 9) of the laminate (11) are welded together, **characterized in that** a bead (12) of plastic in the molten state is extruded and deposited on the internal face of the packaging so as to cover at least the weld zone (10) defined between the edges, the energy needed to produce the weld (10) coming from the plastic bead (12).

2. Process according to Claim 1, **characterized in that** the bead (12) is deposited in the molten state prior to the abutting step.

3. Process according to Claim 1, **characterized in that** the bead (12) is deposited in the molten state during the abutting step.

4. Process according to Claim 1, **characterized in that** the bead (12) is deposited in the molten state after the abutting step.

5. Process according to any one of the preceding claims, **characterized in that** the bead (12) is placed in the molten state beneath said weld zone (10).

6. Process according to any one of preceding Claims 1 to 4, **characterized in that** the bead (12) is placed in the molten state above said weld zone (10).

7. Process according to any one of the preceding claims, **characterized in that** the bead (12) consists of a plastic coextruded with a barrier material (16) at the centre of the bead.

8. Tubular packaging obtained according to a process as defined in any one of the preceding claims, **characterized in that** it comprises an element for reinforcing the zone defined between the edges, which consists of an extruded bead (12) of plastic.

9. Device for implementing a process as defined in any one of Claims 1 to 7, **characterized in that** it includes a welding rod (1) designed to be surrounded by a laminate (11), **characterized in that** it includes means (7) for extruding and placing a bead (12) of plastic in the molten state between the external surface of the welding rod (1) and a laminate (11) placed around said rod (1).

10. Device according to Claim 9, which furthermore includes a preheated conveyor belt (3) placed on the welding rod (1) so that said bead (12) is placed in the molten state between said conveyor belt (3) and a laminate (11) wrapped around said rod (1).

11. Device according to Claim 9 or 10, which includes an external drive belt (6) and an adjustable bearing block (5) that are placed so as to exert, in the direction of said welding rod (1), pressure on a laminate (11) and a bead (12) of plastic in the molten state which would be placed between said drive belt (6) and said welding rod (1).

12. Device according to any one of Claims 9 to 11, in which said means (7) for extruding and placing a bead (12) of plastic in the molten state are placed on the same side as the upper face of the welding rod (1).

13. Device according to any one of Claims 9 to 11, in which said means (7) for extruding and placing a bead (12) of plastic in the molten state are placed on the same side as the lower face of the welding rod (1).

## Patentansprüche

1. Herstellungsverfahren für eine rohrförmige Kunststoffverpackung aufweisend einen Wicklungsschritt, bei dem ein Laminat (11) gewickelt wird, einen Anordnungsschritt, bei dem die Enden (8, 9) des Laminats (11) nebeneinander angeordnet werden und einen Befestigungsschritt, bei dem die Enden (8, 9) des Laminats (11) mittels Schweißen aneinander befestigt werden, **dadurch gekennzeichnet, dass** eine geschmolzene Kunststoffschnur auf die Innenseite der Verpackung in der Art und Weise extrudiert und angeordnet wird, dass zumindest die zwischen den Enden liegende Schweißzone (10) bedeckt ist, wobei die zum Erstellen Schweißzone (10) notwendige Energie aus der Kunststoffschnur (12) stammt.

2. Verfahren nach Anspruch 1, **dadurch gekennzeichnet, dass** die geschmolzene Kunststoffschnur (12) vor dem Anordnen aufgebracht wird.

3. Verfahren nach Anspruch 1, **dadurch gekennzeichnet, dass** die geschmolzene Kunststoffschnur (12) beim Anordnen aufgebracht wird.

4. Verfahren nach Anspruch 1, **dadurch gekennzeichnet, dass** die geschmolzene Kunststoffschnur (12) nach dem Anordnen aufgebracht wird.

5. Verfahren nach einem der vorhergehenden Ansprüche, **dadurch gekennzeichnet, dass** die geschmolzene Schnur (12) unter der Schweißzone (10) aufgebracht wird.

6. Verfahren nach einem der vorhergehenden Ansprüche 1 bis 4, **dadurch gekennzeichnet, dass** die geschmolzene Schnur (12) über der Schweißzone (10) aufgebracht wird.

7. Verfahren nach einem der vorhergehenden Ansprüche, **dadurch gekennzeichnet, dass** die Schnur (12) aus einem Kunststoffmaterial gebildet ist, das mit einem Barrierematieral in der Mitte der Schnur ko-extrudiert ist.

8. Rohrförmige Verpackung erhalten nach einem Verfahren gemäß einem der vorhergehenden Ansprüche, **dadurch gekennzeichnet, dass** sie im Bereich zwischen den beiden Enden ein Verstärkungselement aufweist, das eine extrudierte Kunststoffschnur aufweist.

9. Vorrichtung zum Durchführen eines Verfahrens nach einem der Ansprüche 1 bis 7, **dadurch gekennzeichnet, dass** sie einen Schweißschaft (1) aufweist, der geeignet ist, um von dem Laminat (11) umgeben zu werden, **gekennzeichnet dadurch, dass** sie Mittel (7) aufweist, um eine geschmolzene Kunststoffschnur zwischen der äußeren Oberfläche des Schweißschaftes (1) und einem um diesen Schaft (1) angeordneten Laminat (11) zu extrudieren und anzuordnen.

10. Vorrichtung nach Anspruch 9, unter anderem umfassend ein vorgeheiztes Förderband (3), das auf dem Schweißschaft (1) derart angeordnet ist, dass die geschmolzene Schnur (12) zwischen dem Förderband (3) und einem den Schaft (1) umgebenden Laminat (11) angeordnet ist.

11. Vorrichtung nach Anspruch 9 oder 10, umfassend ein externes Förderband (6) und eine justierbare Stützeinheit (5), die derart angeordnet ist, dass sie in Richtung des Schweißschaftes einen Druck auf ein Laminat (11) und eine geschmolzene Kunststoffschnur (12), die zwischen dem Förderband (6) und dem Schweißschaft (1) angeordnet sind, ausübt.

12. Vorrichtung nach einem der Ansprüche 9 bis 11, bei dem die Mittel (7) zum Extrudieren und Anzuordnen einer geschmolzenen Kunststoffschnur (12) neben der oberen Fläche des Schweißschaftes (1) angeordnet sind.

13. Vorrichtung nach einem der Ansprüche 9 bis 11, bei dem die Mittel (7) zum Extrudieren und Anzuordnen einer geschmolzenen Kunststoffschnur (12) neben der unteren Fläche des Schweißschaftes (1) angeordnet sind.
